(19) Europäisches Patentamt / European Patent Office / Office européen des brevets

(11) **EP 3 020 937 A1**

(12) **DEMANDE DE BREVET EUROPEEN**

(43) Date de publication:
**18.05.2016 Bulletin 2016/20**

(51) Int Cl.:
*F01N 3/20* [(2006.01)]    *F01N 9/00* [(2006.01)]
*F01N 11/00* [(2006.01)]    *F01N 13/00* [(2010.01)]

(21) Numéro de dépôt: **15192817.3**

(22) Date de dépôt: **03.11.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **13.11.2014 FR 1460914**

(71) Demandeur: **Renault S.A.S.**
**92100 Boulogne-Billancourt (FR)**

(72) Inventeurs:
• **LE-BRAS, Ronan**
**75000 PARIS (FR)**
• **SELLAMI, Ali**
**75012 PARIS (FR)**

(54) **PROCÉDÉ DE CONTRÔLE D'UN DISPOSITIF DE MOTORISATION ET DISPOSITIF DE MOTORISATION ASSOCIÉ**

(57) Procédé de contrôle d'un dispositif de motorisation de véhicule automobile comprenant un moteur à combustion interne et un catalyseur de réduction sélective des oxydes d'azote, comprenant :
- une étape (100) de réglage nominal du dispositif de motorisation dans laquelle les émissions d'oxydes d'azote du moteur sont réglées à une valeur de concentration nominale et l'efficacité ($\varepsilon$) du catalyseur est réglée à une valeur d'efficacité nominale ; puis,
- une étape (300) dans laquelle le conducteur du véhicule automobile est alerté d'une perte d'efficacité ($\varepsilon$) du catalyseur par rapport à la valeur d'efficacité nominale, CARACTERISE EN CE QU'
il comprend ensuite, lorsque la quantité disponible de réducteurs ($V_{urée}$) dans un réservoir du véhicule n'est pas inférieure à un stock minimum ($V_{min}$), une étape de premier réglage de sauvegarde (500) du dispositif de motorisation dans laquelle on augmente le débit de réducteurs introduits dans le catalyseur, apte à restaurer l'efficacité ($\varepsilon$) de celui-ci.

Fig. 2

EP 3 020 937 A1

**Description**

DOMAINE TECHNIQUE DE L'INVENTION

L'invention concerne un procédé de contrôle d'un dispositif de motorisation, plus particulièrement d'un dispositif comprenant un moteur à combustion interne fonctionnant en mélange pauvre et un catalyseur de réduction sélective des oxydes d'azote monté à l'échappement dudit moteur. Elle concerne également un dispositif de motorisation pour la mise en oeuvre d'un tel procédé. Elle trouve une application avantageuse sous la forme d'un procédé de contrôle embarqué dans un véhicule automobile équipé d'un dispositif de motorisation comprenant un moteur diesel et un catalyseur de réduction sélective des oxydes d'azote.

ETAT DE LA TECHNIQUE

De nombreux moteurs modernes à combustion interne, en particulier les moteurs diesel des véhicules automobiles, sont équipés à l'échappement d'un catalyseur de réduction sélective des oxydes d'azote, dit aussi catalyseur SCR (de l'acronyme en langue anglaise : Selective Catalytic Reduction).

De manière connue, un tel catalyseur SCR permet de réduire en molécules inoffensives pour l'environnement les molécules d'oxydes d'azote (NOx) émises dans les gaz de combustion du moteur, sous l'action de réducteurs injectés de manière continue à l'entrée du catalyseur SCR. Ces réducteurs sont généralement issus d'une solution d'urée aqueuse connue sous la dénomination commerciale Adblue®.

Un catalyseur SCR permet de diminuer les rejets dans l'atmosphère des émissions d'oxydes d'azote provenant des gaz de combustion d'un moteur, et de respecter les normes légales qui limitent les émissions à l'échappement d'espèces polluantes par les véhicules automobiles. Par exemple, la norme européenne dite « euro6 » limite les émissions d'oxydes d'azote des véhicules équipés d'un moteur diesel à 80 milligrammes par kilomètre parcouru, sur le cycle dit « NEDC ».

D'autre part, la législation oblige les véhicules automobiles à être équipés d'un système de diagnostic embarqué, dit aussi système de contrôle OBD (acronyme en langue anglaise pour : On Board Diagnostic), apte à vérifier de manière continue que les émissions polluantes ne dépassent pas les limites légales, et à signaler le cas échéant un tel dépassement au conducteur, typiquement par l'allumage d'un voyant au tableau de bord, pour que le conducteur puisse faire procéder à la remise en état du véhicule.

Un tel système de contrôle OBD surveille en outre le bon fonctionnement des différents composants du véhicule qui contribuent au respect des niveaux d'émissions polluantes, et il provoque l'allumage d'un voyant, dit voyant OBD, au tableau de bord du véhicule en cas de dépassement de ces niveaux. Ainsi, le conducteur du véhicule est alerté que le véhicule ne respecte plus la législation et il est incité à le faire remettre en état.

Le système de contrôle OBD contrôle notamment les composants qui participent à la formation des gaz de combustion à la sortie du moteur (vanne d'admission d'air, injecteurs de carburant, etc...) et les composants qui participent à la dépollution desdits gaz de combustion dans la ligne d'échappement.

Dans le cas d'un moteur diesel équipé d'un catalyseur SCR, le système de contrôle OBD surveille plus particulièrement l'efficacité du catalyseur, c'est-à-dire le rapport de la quantité d'oxydes d'azote réduite dans le catalyseur, divisée par la quantité d'oxydes d'azote entrant dans le catalyseur.

Selon une étude statistique, la demanderesse a constaté qu'après l'allumage d'un voyant OBD au tableau de bord du véhicule, environ un quart des conducteurs parcourt plus de 1000 kilomètres avant de faire procéder à la remise en état du véhicule. Pendant ce temps, le véhicule émet plus d'oxydes d'azote que dans les conditions normales de fonctionnement, ce qui est nocif pour l'environnement et contraire à la législation.

Il existe donc un besoin de disposer d'un mode de contrôle dégradé du moteur et/ou du catalyseur SCR, c'est-à-dire d'un réglage de sauvegarde, qui permette au véhicule de continuer à respecter le seuil maximal d'émissions d'oxydes d'azote après l'allumage du voyant OBD.

On connaît de l'état de la technique plusieurs documents qui visent à remplir cet objectif. La publication US005651247-A1 divulgue notamment un procédé de contrôle dans lequel, lorsque le réservoir de solution d'urée (Adblue®) alimentant le catalyseur SCR est vide, on règle le moteur en retardant l'injection de carburant, de manière à produire moins d'oxydes d'azote dans les gaz de combustion du moteur. Ce document vise à compenser la perte totale d'efficacité du catalyseur SCR par une moindre émission d'oxydes d'azote à la source, c'est-à-dire à la sortie du moteur. Mais il ne propose aucun réglage de sauvegarde qui soit apte à restaurer l'efficacité du catalyseur SCR.

Dans le document US007992377-B2, un tel réglage de sauvegarde visant à restaurer l'efficacité du catalyseur est prévu. Plus précisément, cette publication divulgue un procédé de contrôle dans lequel, lorsque le réservoir de solution d'urée est vide ou que son niveau est bas, on injecte moins d'agents réducteurs dans le catalyseur que dans un réglage nominal de fonctionnement du catalyseur SCR. On compense la perte d'efficacité du catalyseur SCR, qui résulte du manque d'agents réducteurs, par un réglage de sauvegarde du moteur qui a pour effet d'augmenter la température du catalyseur SCR, ce qui restaure l'efficacité de traitement. On peut aussi prévoir un réglage de sauvegarde du moteur qui vise à produire moins d'oxydes d'azote à la source, par exemple en modifiant l'injection de carburant.

Dans ce procédé, il n'est possible de compenser la perte d'efficacité du catalyseur SCR par une augmentation de température que si le réservoir d'urée n'est pas complètement vide. Si aucun agent réducteur n'est disponible dans le catalyseur SCR, aucun traitement des oxydes d'azote ne peut se dérouler en son sein et l'efficacité est nulle, quelle que soit la température.

D'autre part, les procédés connus ne traitent que de la détection d'une pénurie d'agents réducteurs alimentant un catalyseur SCR. Or, il existe d'autres cas de perte d'efficacité, par exemple dus au vieillissement du catalyseur ou à un choc thermique, qui se produisent malgré un réglage nominal de l'alimentation d'agents réducteurs dans le catalyseur, c'est-à-dire un réglage dans lequel on peut injecter une quantité suffisante d'Adblue®. Ces cas ne sont pas détectés par les procédés connus et conduisent à des dépassements des seuils d'émissions d'oxydes d'azote.

RESUME DE L'INVENTION

L'invention propose de remédier aux défauts des procédés de réglage connus.

Elle propose pour cela un procédé de contrôle d'un dispositif de motorisation de véhicule automobile comprenant un moteur à combustion interne et un catalyseur de réduction sélective des oxydes d'azote monté dans le circuit d'échappement du moteur et apte à décomposer les oxydes d'azote des gaz de combustion du moteur par réaction avec des réducteurs, ledit procédé comprenant :

- une étape de réglage nominal du dispositif de motorisation dans laquelle les émissions d'oxydes d'azote du moteur sont réglées à une valeur de concentration nominale, et l'efficacité du catalyseur est réglée à une valeur d'efficacité nominale ; puis,
- une étape dans laquelle le conducteur du véhicule automobile est alerté d'une perte d'efficacité du catalyseur par rapport à la valeur d'efficacité nominale ($\varepsilon_{NOM}$),

ledit procédé étant caractérisé en ce qu'il comprend ensuite, lorsque la quantité disponible de réducteurs dans un réservoir du véhicule n'est pas inférieure à un stock minimum, une étape de premier réglage de sauvegarde du dispositif de motorisation dans laquelle on augmente le débit de réducteurs introduits dans le catalyseur, apte à restaurer l'efficacité de celui-ci.

Avantageusement, si cette étape de restauration de l'efficacité du catalyseur ne parvient pas à augmenter la valeur de l'efficacité du catalyseur au moins au niveau d'un seuil donné, dit seuil OBD, cette étape de premier réglage de sauvegarde peut être suivie d'une étape de deuxième réglage de sauvegarde apte à diminuer la concentration en oxyde d'azote des gaz d'échappement du moteur par rapport à la valeur de concentration nominale.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 représente un exemple de dispositif de motorisation apte à la mise en oeuvre du procédé selon l'invention ; et,
- la figure 2 est un logigramme des étapes d'un procédé de contrôle du dispositif de motorisation conforme à l'invention.

DESCRIPTION DETAILLEE DES FIGURES

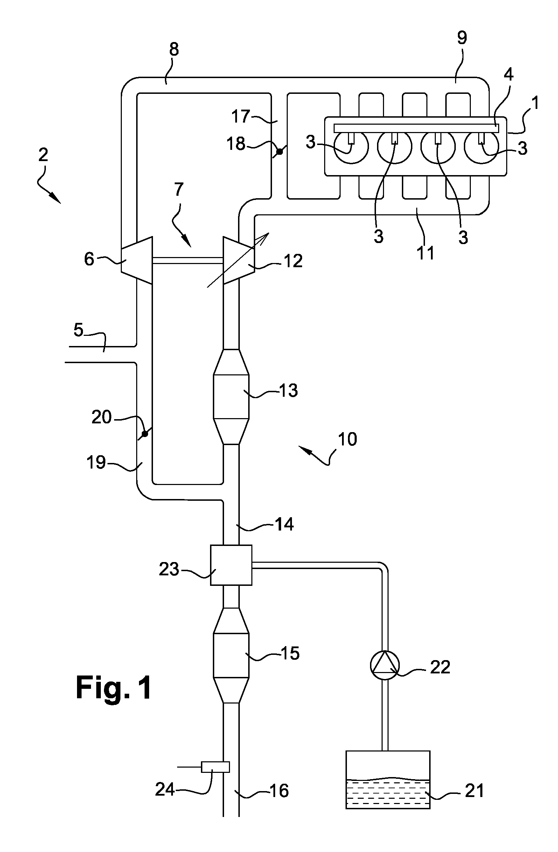

Sur la figure 1, on a représenté un dispositif de motorisation apte à la mise en oeuvre du procédé selon l'invention. Il comprend un moteur 1 à combustion interne, par exemple un moteur diesel de véhicule automobile, qui se présente ici sous la forme d'un moteur à quatre cylindres en ligne suralimenté. Le moteur 1 est alimenté en air par un circuit d'admission d'air 2, et en carburant, par exemple du gazole, par une pluralité d'injecteurs 3 montés sur une rampe commune 4 d'alimentation en carburant.

Le circuit d'admission d'air 2 comporte d'amont en aval, c'est-à-dire dans le sens de circulation de l'air, une conduite d'admission d'air 5, un compresseur 6 d'un turbocompresseur 7 du moteur 1, une conduite de liaison compresseur - collecteur d'admission 8 et un collecteur d'admission 9. Bien entendu, le circuit d'admission 2 peut comporter d'autres composants non représentés ici, par exemple un filtre à air, un refroidisseur d'air suralimenté, une vanne de réglage du débit admis dans le collecteur d'admission 9, un débitmètre, etc.

Le moteur 1 est aussi équipé d'un circuit d'échappement 10 des gaz d'échappement, comprenant d'amont en aval, c'est-à-dire dans le sens de circulation des gaz, un collecteur d'échappement 11, une turbine 12 du turbocompresseur 7, un pot catalytique 13 comportant par exemple un catalyseur d'oxydation 13 et/ou un filtre à particules 13, une conduite de liaison 14 pot catalytique - catalyseur SCR, un catalyseur de réduction sélective des oxydes d'azote 15, dit aussi catalyseur SCR 15, et une conduite d'échappement 16.

La flèche représentée sur la turbine 12 signale qu'il s'agit d'une turbine dont les ailettes sont inclinables. En d'autres termes le turbocompresseur 7 se présente ici sous la forme d'un turbocompresseur 7 à géométrie variable. Bien entendu, dans une variante non représentée, le turbocompresseur 7 peut être un turbocompresseur à géométrie fixe.

Le circuit d'échappement 10 comprend par ailleurs ici deux circuits de recirculation partielle des gaz d'échappement à l'admission : un premier circuit de recirculation partielle des gaz d'échappement à haute pression 17, dit aussi circuit EGR HP 17 (de l'acronyme en langue anglaise pour: Exhaust Gas Recycling) prend naissance en un point du circuit d'échappement 10 situé entre le collecteur d'échappement 11 et la turbine 12. Son autre extrémité débouche dans la conduite de liaison compresseur - collecteur d'admission 8. Il est équipé d'une vanne de recirculation partielle des gaz d'échappement à haute pression 18, dite aussi vanne EGR HP 18, dont le réglage permet d'ajuster la proportion de gaz recyclés à l'admission.

Un second circuit de recirculation des gaz d'échappement des gaz d'échappement à basse pression 19, dit aussi circuit EGR BP 19, prend naissance en aval du pot catalytique 13, en un point du circuit d'échappement situé sur la conduite de liaison 14 pot catalytique - catalyseur SCR. Son autre extrémité débouche dans la conduite d'admission d'air 5, en amont du compresseur 6. Il est équipé d'une vanne de recirculation partielle des gaz d'échappement à basse pression 20, dite aussi vanne EGR BP 20, dont le réglage permet d'ajuster la proportion de gaz recyclés.

D'autres variantes de réalisation du dispositif de motorisation sont possibles sans nuire à la généralité de l'invention. Par exemple, le circuit d'échappement peut ne comporter qu'un seul des deux circuits EGR 17,19. On peut aussi prévoir d'autres modes de réglage de la proportion de gaz recyclés. Par exemple, la proportion de gaz d'échappement recyclés à basse pression peut être ajustée en réglant une vanne d'étranglement de la conduite d'échappement 16, etc.

Le catalyseur SCR est alimenté en agents réducteurs, provenant d'une solution d'urée aqueuse (Adblue®) à partir d'un réservoir 21. La solution est pompée par une pompe 22 et introduite en amont du catalyseur SCR 15 en un point de la conduite de liaison 14 pot catalytique - catalyseur SCR grâce à un dispositif d'introduction 23, par exemple un mixeur 23 ou un injecteur d'urée 23.

Le dispositif de motorisation comprend des moyens de détermination de la quantité de réducteurs (Adblue®) $V_{urée}$ disponible dans le réservoir 21, par exemple une jauge de niveau (non représentée) montée dans le réservoir. Il comprend également des moyens de comparaison de ladite quantité avec un stock minimum $V_{min}$.

En aval du catalyseur SCR 15 (dans le sens de circulation des gaz d'échappement), un capteur d'oxydes d'azote 24, dit capteur d'oxydes d'azote aval 24, permet de mesurer la concentration en oxydes d'azote sortant $[NOx]_{out}$ du catalyseur SCR 15 après traitement et rejetés dans l'atmosphère extérieure. Ce capteur 24 est monté par exemple sur la conduite d'échappement 16.

Un second capteur d'oxydes d'azote (non représenté sur la figure), dit capteur d'oxydes d'azote amont, peut être monté sur la conduite de liaison 14 pot catalytique - catalyseur SCR en amont du dispositif d'introduction 23, pour mesurer la concentration en oxydes d'azote entrant $[NOx]_{in}$ dans le catalyseur SCR 15, lorsque celle-ci n'est pas déterminée par un modèle.

Le dispositif de motorisation comprend aussi des moyens de contrôle (non représentés), par exemple un calculateur électronique, apte à régler les paramètres de fonctionnement du dispositif de motorisation, notamment du moteur 1 et du catalyseur SCR, en fonction d'une consigne de couple correspondant à un enfoncement de la pédale d'accélérateur par le conducteur du véhicule et à un régime donné. De manière connue en soi, le calculateur règle l'admission d'air et les quantités de gaz d'échappement à haute pression et/ou à haute pression recyclés à l'admission, l'injection de carburant dans le moteur, et le débit de la solution aqueuse de réducteurs injecté dans le catalyseur SCR 15.

En fonctionnement normal, c'est-à-dire en l'absence de défaillance du moteur 1 et/ou du catalyseur SCR 15, le réglage du dispositif de motorisation est un réglage nominal. Par exemple, la concentration d'oxydes d'azote émis dans les gaz d'échappement, qui correspond à la concentration d'oxydes d'azote entrant $[NOx]_{in}$ dans le catalyseur SCR, peut être réglée en ajustant la proportion de gaz d'échappement à haute pression et/ou à basse pression recyclés à l'admission.

De manière connue en soi, une augmentation de la proportion de gaz recyclés favorise une diminution de la concentration en oxydes d'azote, mais cette diminution est obtenue au prix d'une augmentation de la quantité de suies dans les gaz de combustion, dont l'élimination par le filtre à particules 13 entraîne une surconsommation de carburant. Dans le réglage nominal du dispositif de motorisation, le réglage de la concentration d'oxydes d'azote $[NOx]_{in}$ est donc réglée à une valeur de concentration nominale $[NOx]_{inNOM}$ qui est le résultat d'un compromis avec les émissions de suies. On comprend néanmoins qu'un réglage de sauvegarde diminuant encore plus la concentration d'oxydes d'azote $[NOx]_{in}$ est possible en modifiant le compromis. Pour cela, on peut augmenter la proportion de gaz recyclés.

Pour ce faire, le dispositif de motorisation comprend des moyens de basculement de son réglage, depuis son réglage nominal vers un tel réglage de sauvegarde apte à diminuer la concentration en oxydes d'azote.

De la même manière, dans le réglage nominal du dispositif de motorisation, le débit de réducteurs injectés dans le catalyseur SCR 15 est réglé à une valeur nominale qui confère au catalyseur SCR 15 une efficacité nominale. De manière connue en soi, on vise à maintenir à l'intérieur du catalyseur SCR 15 une quantité d'ammoniac résultant de la décomposition dans le catalyseur SCR 15 de la solution aqueuse d'urée. Ce stock d'ammoniac, dit aussi ASC (de l'acronyme en langue anglaise pour : Ammonia Storage Capacity), doit être assez élevé pour favoriser la réduction des oxydes d'azote. Toutes choses égales par ailleurs, et notamment pour une température de catalyseur SCR donnée, une augmentation de l'ASC est connue pour favoriser l'efficacité d'un catalyseur SCR 15. Toutefois, en raison des risques de fuite d'ammoniac plus élevés, surtout dans des conditions où la température peut augmenter brutalement, le réglage nominal du débit de réducteurs injectés résulte d'un compromis entre le stock d'ammoniac et le risque de fuite. On comprend néanmoins qu'un réglage de sauvegarde visant à augmenter davantage l'efficacité $\varepsilon$ du catalyseur SCR 15 est possible en modifiant le compromis, c'est-à-dire en augmentant le risque de fuites. Pour cela, on augmente le débit de la solution d'urée injecté dans le catalyseur SCR 15 par rapport au débit nominal.

Pour ce faire, le dispositif de motorisation comprend des moyens de son réglage, depuis le réglage nominal vers un tel réglage de sauvegarde apte à restaurer l'efficacité du catalyseur.

Le calculateur comprend des moyens de détermination de l'efficacité $\varepsilon$ du catalyseur SCR selon l'équation :

$$(Equ.1) \qquad \varepsilon = ( [NOx]_{in} - [NOx]_{out}) / [NOx]_{in} ,$$

équation dans laquelle

- $[NOx]_{in}$ désigne la concentration en oxydes d'azote entrant dans le catalyseur SCR 15, mesurée par un capteur d'oxydes d'azote amont, et
- $[NOx]_{out}$ désigne la concentration en oxydes d'azote sortant du catalyseur SCR 15, mesurée par le capteur d'oxydes d'azote aval 24.

En variante, la concentration en oxydes d'azote entrant dans le catalyseur SCR 15 peut aussi provenir, de manière classique, d'une cartographie archivée dans une mémoire du calculateur. Cette concentration résulte d'un modèle qui est fonction d'un ensemble de paramètres comprenant au moins le régime du moteur et le couple.

Le calculateur comprend des moyens de comparaison de l'efficacité $\varepsilon$ avec un seuil d'efficacité $\varepsilon_{OBD}$, dit seuil OBD.

Le calculateur comprend des moyens aptes à déclencher une alerte au tableau de bord du véhicule, typiquement sous la forme de l'allumage d'un voyant, dit voyant OBD, lorsque l'efficacité $\varepsilon$ du catalyseur est inférieure audit seuil $\varepsilon_{OBD}$, qui est inférieur à l'efficacité nominale $\varepsilon_{NOM}$. En d'autres termes, une alerte n'est déclenchée que lorsque la perte d'efficacité $\varepsilon$ est notable, par exemple après un vieillissement important du catalyseur.

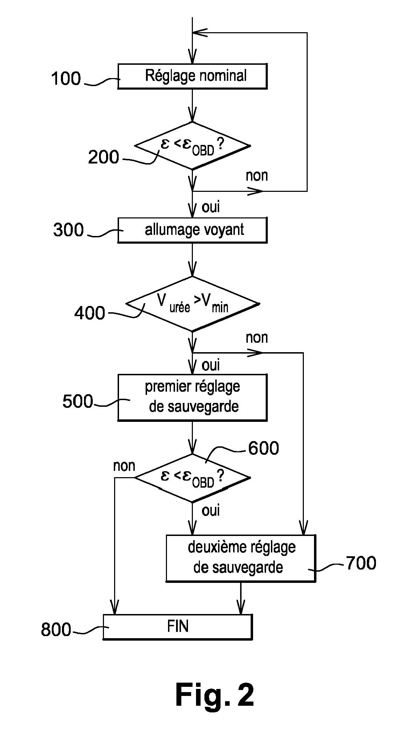

La figure 2 est un logigramme des étapes du procédé de contrôle du dispositif de motorisation selon un mode de réalisation de l'invention.

Le procédé débute par une étape 100 dans laquelle le dispositif de motorisation est réglé dans un mode de réglage nominal, dans lequel la concentration en oxydes d'azote dans les gaz de combustion du moteur est réglé à une valeur de concentration nominale et l'efficacité du catalyseur SCR est réglée à une valeur nominale, par exemple en ajustant respectivement la quantité de gaz d'échappement à haute pression et/ou à basse pression recyclés à l'admission et le débit de la solution d'urée aqueuse introduit dans le catalyseur SCR.

Le procédé se poursuit par une étape 200 dans laquelle le calculateur détermine une valeur de l'efficacité réelle $\varepsilon$ du catalyseur SCR 15 selon l'équation 1 mentionnée plus haut, et la compare à un seuil $\varepsilon_{OBD}$ dit seuil d'efficacité OBD. Ce seuil $\varepsilon_{OBD}$ est inférieur à l'efficacité nominale $\varepsilon_{NOM}$.

Si l'efficacité est supérieure ou égale au seuil, le procédé reprend à l'étape 100. Dans le cas contraire, le procédé est orienté vers une étape 300 dans laquelle le conducteur du véhicule est alerté d'une perte d'efficacité du catalyseur SCR 15, par exemple par l'allumage d'un voyant au tableau de bord du véhicule.

Le procédé se poursuit alors par une étape 400 dans laquelle on détermine la quantité de réducteurs $V_{urée}$ disponible dans le réservoir 21, et on la compare à un stock minimum $V_{min}$.

Si ladite quantité n'est pas inférieure audit stock minimum, le procédé oriente vers une étape 500 de premier réglage de sauvegarde. Plus précisément, le calculateur bascule le dispositif de motorisation dans un premier réglage de sauvegarde visant à augmenter l'efficacité $\varepsilon$ du catalyseur SCR 15. De préférence, le premier réglage de sauvegarde peut consister en une augmentation du débit de la solution d'urée injectée dans le catalyseur SCR 15.

Dans le cas contraire, le procédé oriente directement vers une étape de deuxième réglage de sauvegarde 700 qui est décrite plus bas.

Le procédé se poursuit par une nouvelle étape 600 de calcul de l'efficacité $\varepsilon$ du catalyseur SCR 15 et de comparaison avec un seuil, par exemple le même seuil d'efficacité OBD $\varepsilon_{OBD}$ qu'à l'étape 200.

Si l'efficacité est restaurée, c'est-à-dire si elle est redevenue supérieure ou égale au seuil après l'application du premier réglage de sauvegarde, le procédé se termine, à l'étape de fin 800. En d'autres termes, le voyant OBD reste allumé au tableau de bord, mais le dispositif de motorisation est réglé de telle façon que le véhicule continue de présenter des émissions conformes à la législation jusqu'à sa remise en état.

Dans le cas contraire, le procédé se poursuit par une étape 700 dans laquelle le réglage du dispositif de motorisation est modifié une nouvelle fois. Plus précisément, le calculateur bascule le dispositif de motorisation dans un deuxième réglage de sauvegarde visant à diminuer la concentration en oxydes d'azote $[NOx]_{in}$ émis dans les gaz de combustion du moteur par rapport au réglage nominal. Par exemple, on peut régler ladite concentration à une valeur qui compense la perte d'efficacité constatée du catalyseur SCR, c'est-à-dire à une valeur qui permette de conserver une concentration en oxydes d'azote $[NOx]_{out}$ rejetée dans l'atmosphère compatible avec la législation. De préférence, ce deuxième réglage de sauvegarde peut consister en une augmentation de la proportion de gaz recyclés.

## Revendications

1. Procédé de contrôle d'un dispositif de motorisation de véhicule automobile comprenant un moteur (1) à combustion interne et un catalyseur de réduction sélective (15) des oxydes d'azote monté dans le circuit d'échappement (10) du moteur et apte à décomposer les oxydes d'azote des gaz de combustion du moteur par réaction avec des réducteurs, ledit procédé comprenant :

   - une étape (100) de réglage nominal du dispositif de motorisation dans laquelle les émissions d'oxydes d'azote du moteur sont réglées à une valeur de concentration nominale ($[NOx]_{inNOM}$) et l'efficacité ($\varepsilon$) du catalyseur (15) est réglée à une valeur d'efficacité nominale ($\varepsilon_{NOM}$) ; puis,
   - une étape (300) dans laquelle le conducteur du véhicule automobile est alerté d'une perte d'efficacité ($\varepsilon$) du catalyseur (15) par rapport à la valeur d'efficacité nominale ($\varepsilon_{NOM}$),

   **CARACTERISE EN CE QU'**
   il comprend ensuite, lorsque la quantité disponible de réducteurs ($V_{urée}$) dans un réservoir (21) du véhicule n'est pas inférieure à un stock minimum ($V_{min}$), une étape de premier réglage de sauvegarde (500) du dispositif de motorisation dans laquelle on augmente le débit de réducteurs introduits dans le catalyseur (15), apte à restaurer l'efficacité ($\varepsilon$) de celui-ci.

2. Procédé de contrôle selon la revendication 1, **caractérisé en ce qu'**il comprend en outre, pour déclencher l'étape d'alerte (300) du conducteur, une étape (200) au cours de laquelle :

   - on détermine l'efficacité ($\varepsilon$) du catalyseur (15) ; et,
   - on constate que ladite efficacité ($\varepsilon$) est inférieure à un seuil d'efficacité ($\varepsilon_{OBD}$).

3. Procédé selon la revendication 2, dans lequel le seuil d'efficacité ($\varepsilon_{OBD}$) est inférieur à la valeur d'efficacité nominale ($\varepsilon_{NOM}$).

4. Procédé selon l'une quelconque des revendications 1 à 3, dans lequel le conducteur est alerté d'une perte d'efficacité du catalyseur (15) par l'allumage d'un voyant au tableau de bord du véhicule.

5. Procédé selon l'une quelconque des revendications 2 à 4, **caractérisé en ce qu'**il comprend, après la première étape de sauvegarde (500) :

   - une étape (600) de détermination de l'efficacité ($\varepsilon$) du catalyseur (15) et de comparaison de celle-ci avec un seuil ($\varepsilon_{OBD}$) ; et,
   - si ladite efficacité est inférieure audit seuil, une étape de deuxième réglage de sauvegarde (700) du dispositif de motorisation apte à diminuer la concentration en oxydes d'azote ($[NOx]_{in}$) dans les gaz de combustion du moteur (1) par rapport à la concentration nominale ($[NOx]_{inNOM}$).

6. Procédé de contrôle selon la revendication 5, **caractérisé en ce qu'**on diminue la concentration en oxydes d'azote lors de l'étape de deuxième réglage de sauvegarde (700) en augmentant une proportion de gaz d'échappement recyclés à l'admission du moteur (1) par un circuit de recirculation partielle des gaz d'échappement (17,19).

**7.** Dispositif de motorisation de véhicule automobile pour la mise en oeuvre du procédé selon l'une quelconque des revendications 5 ou 6, comprenant un moteur (1) à combustion interne et un catalyseur de réduction sélective des oxydes d'azote (15) monté dans le circuit d'échappement (10) du moteur et apte à décomposer les oxydes d'azote des gaz de combustion du moteur par réaction avec des réducteurs, CACTERISE EN CE QU'il comprend en outre :

  - des moyens de détermination de l'efficacité ($\varepsilon$) du catalyseur (15) ;
  - des moyens de comparaison de ladite efficacité avec un seuil ($\varepsilon_{OBD}$) ;
  - des moyens de déclenchement d'une alerte du conducteur du véhicule automobile, lorsque l'efficacité ($\varepsilon$) est inférieure au seuil ($\varepsilon_{OBD}$) ;
  - des moyens de détermination de la quantité de réducteurs ($V_{urée}$) disponible dans un réservoir (21) du véhicule ;
  - des moyens de comparaison de ladite quantité de réducteurs avec un stock minimum ($V_{min}$) ;
  - des moyens de basculement du réglage du dispositif de motorisation dans un premier réglage de sauvegarde apte à augmenter l'efficacité ($\varepsilon$) du catalyseur (15) ; et
  - des moyens de basculement du réglage du dispositif de motorisation dans un deuxième réglage de sauvegarde apte à diminuer les émissions d'oxydes d'azote du moteur.

**Fig. 1**

**Fig. 2**

Europäisches
Patentamt

European
Patent Office

Office européen
des brevets

**RAPPORT DE RECHERCHE EUROPEENNE**

Numéro de la demande

EP 15 19 2817

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/293451 A1 (KESSE MARY LOU [US]) 3 décembre 2009 (2009-12-03) | 1-4 | INV. F01N3/20 |
| Y | * alinéas [0046], [0048] - [0051] * <br> * figures 1, 2 * <br> ----- | 5-7 | F01N9/00 <br> F01N11/00 <br> F01N13/00 |
| Y | WO 2011/161351 A2 (PEUGEOT CITROEN AUTOMOBILES SA [FR]; BOISSARD ROMAIN [FR]; MAESSE PIER) 29 décembre 2011 (2011-12-29) <br> * alinéas [0023], [0036], [0046], [0048] * <br> * figures 3, 5 * <br> ----- | 5-7 | |
| A | US 2013/104637 A1 (KOWALKOWSKI JANEAN E [US] ET AL) 2 mai 2013 (2013-05-02) <br> * le document en entier * <br> ----- | 1-7 | |

DOMAINES TECHNIQUES
RECHERCHES (IPC)

F01N

Le présent rapport a été établi pour toutes les revendications

| Lieu de la recherche | Date d'achèvement de la recherche | Examinateur |
|---|---|---|
| Munich | 2 mars 2016 | Buecker, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 19 2817

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-03-2016

| Document brevet cité au rapport de recherche | Date de publication | Membre(s) de la famille de brevet(s) | Date de publication |
|---|---|---|---|
| US 2009293451 A1 | 03-12-2009 | AUCUN | |
| WO 2011161351 A2 | 29-12-2011 | EP 2585701 A2<br>FR 2961558 A1<br>WO 2011161351 A2 | 01-05-2013<br>23-12-2011<br>29-12-2011 |
| US 2013104637 A1 | 02-05-2013 | CN 103089387 A<br>DE 102012219306 A1<br>US 2013104637 A1 | 08-05-2013<br>02-05-2013<br>02-05-2013 |

EPO FORM P0460

Pour tout renseignement concernant cette annexe : voir Journal Officiel de l'Office européen des brevets, No.12/82

**EP 3 020 937 A1**

**RÉFÉRENCES CITÉES DANS LA DESCRIPTION**

**Documents brevets cités dans la description**

- US 005651247 A1
- US 007992377 B2